# EUROPEAN PATENT APPLICATION

(11) **EP 2 399 678 A2**
(43) Date of publication of application: **28.12.2011**
(21) Application number: 11181272.3
(22) Date of filing: 20.03.2007
(51) Int. Cl.: B07C 5/34, B07C 5/38, A41D 19/00, G07C 3/14, G01M 3/40, B08B 3/02, B08B 3/04

(54) **A system for the processing of reusable gloves**

(30) Priority: 21.03.2006 SG 200601745
(62) Divisional of application: 07716163.6
(71) Applicant: TGT Enterprise Ltd., Road Town, Tortola (VG)
(72) Inventor: Hampe, Patrick, 258355 Singapore (SG)
(74) Representative: Talbot-Ponsonby, Daniel Frederick

(57) **Abstract**

A system for processing reusable gloves comprising a conveyor means to convey a plurality of the reusable gloves to a plurality of processing stations; said processing stations including; a loading station for mounting the gloves to the conveyor means; an inspection station for inspecting the gloves for pre-determined criteria; a washing station for washing the gloves; an interrogation station for electronically or optically readable interrogating identification means of the gloves so as to receive data from said identification means; a testing station for testing the integrity of the gloves; an unloading station for unloading the gloves, said processing system being in communication with a tracking system.

## Description

### Field of the Invention

The invention relates to the reprocessing of gloves, such as, but not limited to, thin polymeric gloves. Such gloves may be used in the health, food processing and high tech industries. In particular, the invention relates to methods and apparatus for the conditioning and reconditioning and subsequent tracking of such gloves.

### Background

Glove manufacturers produce single use glove that generally do not contain distinctive marking that permit tracking for quality and other factors for consumer and regulating agencies. Most of the high volume usages of these types of gloves are in health care, the food processing chain and high tech industry. These gloves must be traceable for quality reasons because, even if single usage is often the rule for this product, knowledge of the manufacturer and the lot number is imperative for the consumer and quality control services.

The marked (printed) gloves that do currently exist only allow users to know, at best, the size and orientation (right or left hand) and the manufacturer, but not the lot number nor the individual serial number. These marking are generally alphanumeric characters which are difficult to read automatically even through scanners specially adapted to this purpose, essentially due to the elasticity of the glove material. Moreover, such gloves are manually packed in boxes that only show a lot number, but as soon as the glove is removed from its box for use, all traces of lot specificity are lost. Thus, tracking is impossible in the case of glove defects identified at the time of use, or for reutilization.

Some glove manufacturers and particularly those involved with heavy gloves which may be customarily recycled, print manufacturing lot numbers on their gloves or print as well as consecutive numerals, which enable the user to log the number of reprocessing cycles, by manually crossing sequential numbers and manually sorting the glove by size before or after each reprocessing cycle.

Currently, more than 50% of all the heavy-duty gloves consumed annually in various manufacturing applications are reconditioned and used multiple times. These gloves are made out of knitted fabrics or leather and are less subject to legal regulations. However, the "disposable" glove category, which are generally made of thin polymeric film (such as, natural rubber latex, nitrile polymer, polyurethane, polyvinylchloride), has not been so exploited for several critical reasons:
i) Need for more comprehensive glove identification;
ii) High processing costs and labour intensive process;
iii) Difficulty in turning gloves inside out (reversing);
iv) Difficulty of ensuring maintenance of impermeability in a fragile product, and;
v) Risk of contamination.

These marking systems, while enabling sorting and limited tracking of the numbers of uses, do not allow the linking of the reprocessing steps to a specific glove. It follows that there will be a loss of traceability and therefore, quality assurance, for a glove within a known lot.

Glove manufacturers who wish to wash their gloves as they leave the production line perform each step manually. Gloves are manually transferred from the manufacturing line into an industrial washing machine, then transferred by hand into dryers and finally manually packed. These operations are labour intensive, and therefore expensive, as they require many workers in each of the different steps of the process. In the case of gloves marketed for use in the clean-room sector the washing, drying and packaging process needs to be done in clean room conditions that further considerably increase cost.

Glove reprocessors who wish to reprocess used gloves face the same problems amplified by the fact that used gloves are frequently :
i) Contaminated on both surfaces and no certainty exists that normal washing devices are cleaning inside and outside as the flow of water is not directed to enter the interior of the glove;
ii) For gloves used in the healthcare sector, microbiological contamination is difficult to remove leading the reprocessors to use strong disinfectants which give rise to skin irritation risks for the workers;
iii) Used gloves also usually contain another, from the other hand within them due to they way people typically take them off;
iv) Some automatic washing mechanisms do not allow complete washing of the glove surface, as the means of holding the glove are static and prevent the washing of glove surface enclosed in the grasping mechanism making it impossible to wash, brush and decontaminate the entire surface of the glove;
v) In the case of gloves used in the health care industry, regulatory bodies such as FDA require individual tracking just as for other medical devices being reprocessed but without a unique serial number or other means of identification for each glove, this is impossible, thereby currently preventing the sale of reprocessed gloves into these sectors;

With reference to quality testing, different requirements specified by the ISO and regulating bodies such as the FDA involve manual testing and are achievable only through random sampling from production volumes running into millions. In many industries, this provides not individual but only statistical assurance of production uniformity.

Glove pinholes tests are normally performed through an ASTM "Water Leak Test" where samples of gloves are filled with one litre of water. The appearance of water drops at the surface of gloves after 2 minutes indicates the presence of a pinhole. This method does not have the accuracy expected for exam gloves classified as "medical devices".

A derivation of this method is the usage of "electrolyte" liquid poured into the glove. Here, the pinholes ease the passage of "electron ions" which are more easily detected. This method is more commonly used for surgical glove testing.

A further alternative is an "air" leak test, which involves the inflation of gloves, without uniform air pressure inside the glove. The deflation of the glove after a designated time denotes the presence of pinholes. When inflated in this way in order to verify the presence of a leak indicating a pinhole, the upper part of the glove, which is thinner, is put under more stress than the thicker parts located inside the fingers. This results in a differential stress distribution through the "skin" of the glove, concentrated more in the upper part of the glove, which generally prevents air from escaping from the finger extremities, leading to inaccurate results, thereby putting the trustworthiness into doubt as statistically pinholes are generally more likely to be present in the fingers than elsewhere.

As for stains on the surface of the glove, whether produced in the course of fabrication or in subsequent use, they are detectable only through visual inspection and not automatically, and it is impossible to manually check all the gloves in a production line or during subsequent reconditioning.

### Statement of Invention

It is therefore an object of the present invention to develop a system for either or both reprocessing gloves such as thin polymeric gloves, and tracking the progress and other factors of said gloves.

In a first aspect, the invention provides a system for processing reusable gloves comprising a conveyor means to convey a plurality of the reusable gloves to a plurality of processing stations; said processing stations including; a loading station for mounting the gloves to the conveyor means; an inspection station for inspecting the gloves for pre-determined criteria; a washing station for washing the gloves; an interrogation station for interrogating electronically or optically readable identification means of the gloves so as to receive data from said identification means; a testing station for testing the integrity of the gloves; an unloading station for unloading the gloves. The processing system is in communication with a tracking system for tracking the progress of said gloves. The tracking system comprises
a database for storing and accessing the data on each glove;
a plurality of tracking stations, of which the interrogation station is one, each in communication with the database preferably via a wired or wireless connection to any one or a combination of a LAN, WAN and internet;
each tracking station having interrogation means for interrogating the identification means of each glove;
such that the data on each glove is collected at each tracking station, said data and the location of the tracking station being communicated to the database so as to locate and track the progress of each glove from each tracking station.

In a preferred embodiment, the invention may enable gloves used in the healthcare, food processing and high-tech industry, to be printed or otherwise marked with unique identifying information. Further, said gloves may, after usage, be reconditioned to be again 'as new' for a pre-determined number of processing cycles and, packed by size, and each individual glove's usage history to be recorded.

In a preferred embodiment, the invention may enable a new economic model whereby all data concerning reconditioning is centrally captured and used to distribute the resulting revenue income to all elements of the supply chain from manufacturer to final supplier

In a preferred embodiment, the invention may include a device, supported by a tracking system, into which used gloves may be loaded and which may then automatically subject each glove, both inside and out, to a number of discrete processes that perform cleaning, rinsing, drying, pinhole testing, visual cleanliness assessment, sterilizing irradiation, rejection of non-conforming gloves. Further, the processed gloves may be automatically packaged by size, or other category. Each glove may be individually traceable through a unique code printed on it either at time of manufacture or separately later.

In a preferred embodiment, the invention may provide a conveyor comprising a number of links that may also act as glove holders. The gloves may be suspended using their inherent elasticity and further, may be turned inside out.

In a preferred embodiment, the code may be printed on the glove during the manufacturing process, or alternatively before a processing cycle. Further, it may be read by the machine during the reprocessing cycle.

The code may include, *inter alia,* data unique to the glove, such as a serial number, allowing the traceability of the particular processed glove, and so maintain its historical data from manufacturing to end of use.

End of life may be reached after a pre-determined number of successful reprocessing cycles, for instance, in the range of 2 to 20. Alternatively, the detection of a quality assurance defect may cause that particular glove to be rejected by the reprocessing machine.

The database system may automatically record aspects of individual glove reprocessing. It may further make appropriate quality checks and provide the information to the customer of the specific glove, or alternatively, a statistical analysis of a batch of gloves. The data may also be communicated by a tracking station of the device intermittently to a central database which may consolidate the data from all the tracking stations of the plurality of reprocessing devices.

This centralized database may then enable the segregation of data of glove usage by customers, by user of each reprocessing machine, by country, region and thus may also enable invoicing on a "per reprocessed glove" basis to the relevant party.

The glove may have a unique matrix code identifier permitting record keeping on individual glove usage history and quality assurance with individual traceability from manufacturing through to final disposal. Coupled with the tracking system according to the invention, this may provide means to be matched to a royalty billing method enabling extraction of value, potentially for the entire supply chain.

An economic advantage of the invention, is that the cost of usage of high end quality gloves may be markedly reduced. Moreover, waste disposal volume may also be reduced.

### Brief Description of Drawings

It will be convenient to further describe the present invention with respect to the accompanying drawings that illustrate possible arrangements of the invention. Other arrangements of the invention are possible, and consequently the particularity of the accompanying drawings is not to be understood as superseding the generality of the preceding description of the invention.
Figure 1 is an elevation view of a Glove Reprocessing Unit (GRU) according to one embodiment of the present invention;
Figure 2 is a plan view of the GRU of Figure 1;
Figure 3 is an isometric view of a Transport Link Device (TLD) according to one embodiment of the present invention;
Figure 4 is an elevation view of the TLD of Figure 3;
Figure 5 is an isometric view of a series of interconnected TLD's of Figure 3;
Figure 6 is a schematic view of a reusable glove according to one embodiment of the present invention;
Figure 7 is an elevation view of a test apparatus according to one embodiment of the present invention;

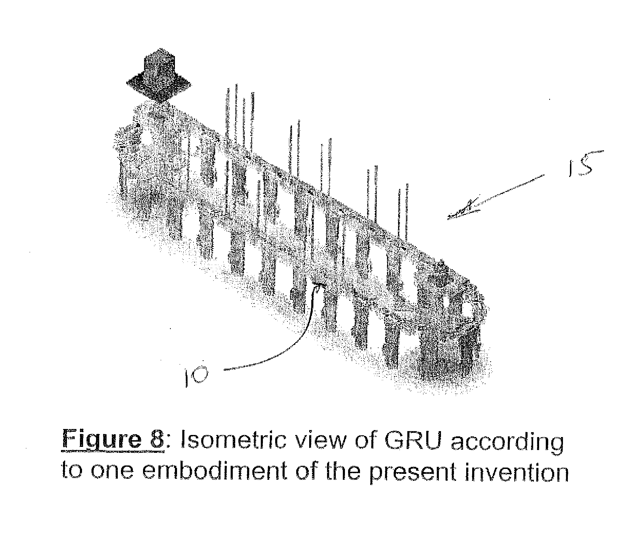

Figure 8 is an isometric view of the GRU according to one embodiment of the present invention;

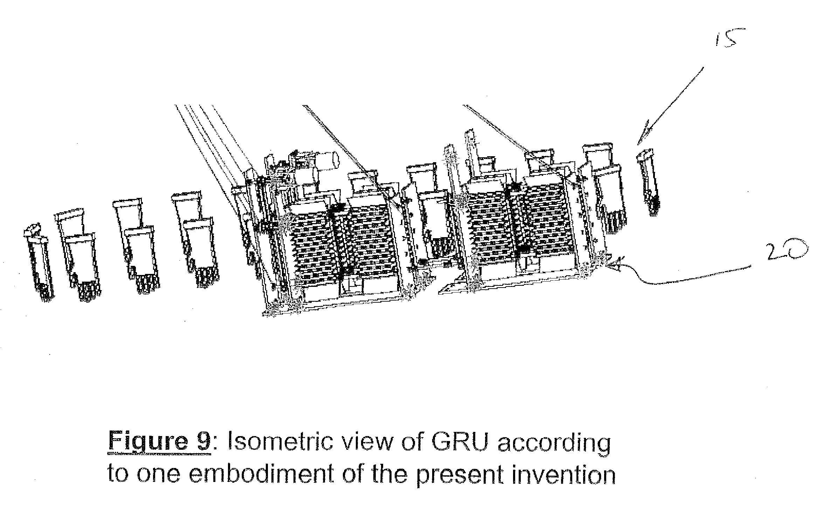

Figure 9 is an isometric view of the GRU according to one embodiment of the present invention;

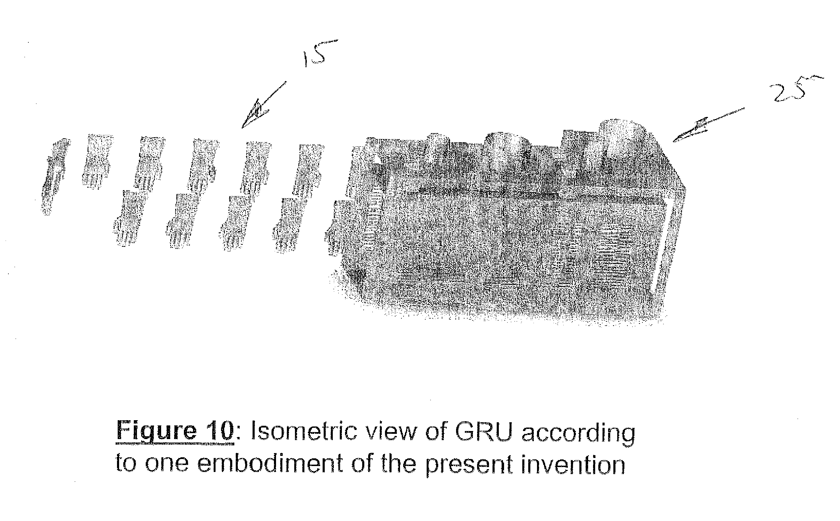

Figure 10 is an isometric view of the GRU according to one embodiment of the present invention;

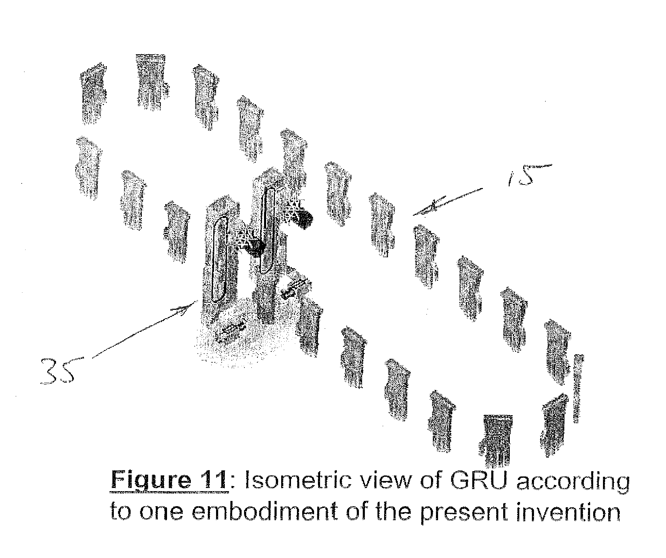

Figure 11 is an isometric view of a test apparatus according to one embodiment of the present invention.
Figure 12 is an isometric view of a test apparatus according to one embodiment of the present invention;
Figure 13A is an elevation view of a test apparatus according to one embodiment of the present invention, and;
Figure 13B is a detailed view of the test apparatus of Figure 13A.

### Description of Preferred Embodiment

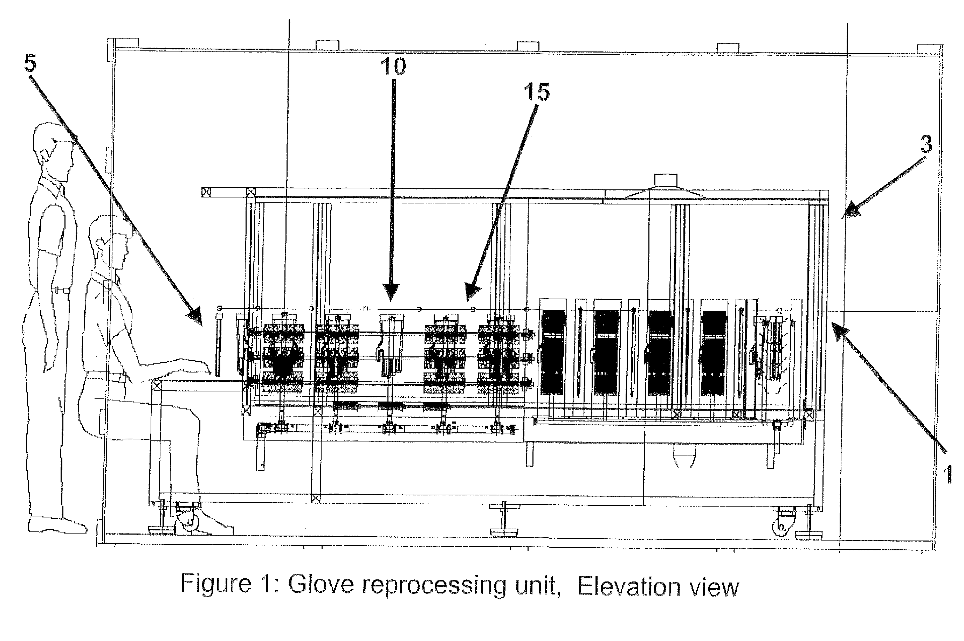

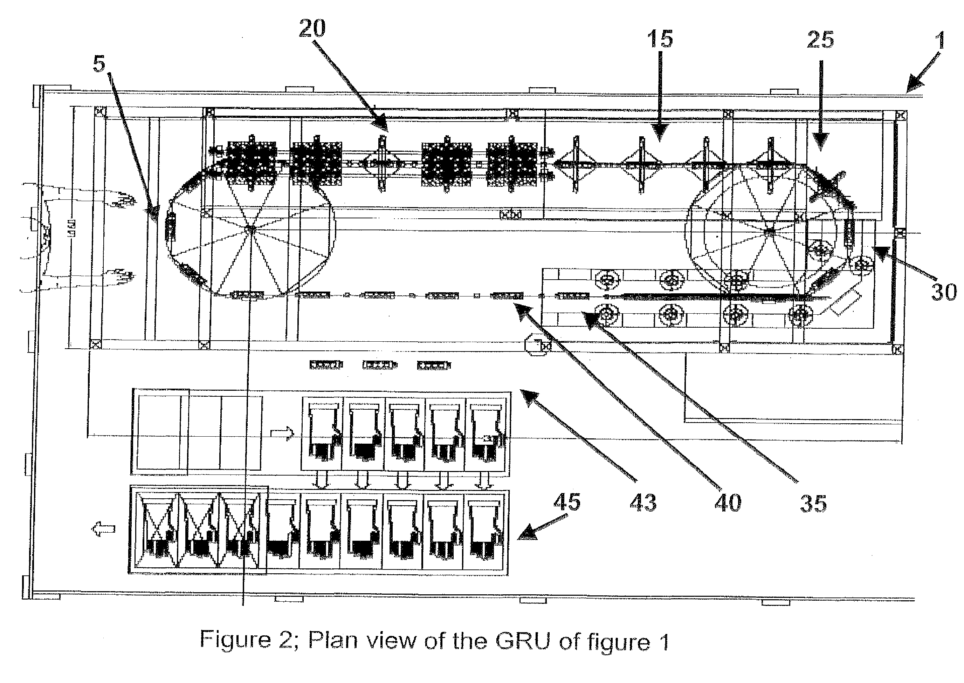

As shown in Figures 1 and 2, the invention according to one embodiment comprises a series of linked processing stages 3 encapsulated in a single enclosure 1 that together automatically perform all the procedures necessary to resolve the individual and cumulative problems previously described in glove reprocessing. The automatic and computer-controlled machine, integrating a horizontal conveyor belt, formed by links which are themselves also glove-holders, moving forward horizontally (in the best case), and along which the successive steps of manual glove placing, automatic glove returning, washing, rinsing, drying, sterilizing, testing, packaging are performed.

The conveyer belt 15 permits the glove to be processed through different 'work stations' in a pre-determined processing cycle. First, the operator hangs a glove on an empty link 5. He stretches the cuff on the pinchers or projections (not shown) such that the glove is then hanging. The chain 15 moves forward one link every 3 to 4 seconds enabling the manual loading.

The glove remains entrapped within the cuff or opening through application of the pinchers associated with the rotatable projections within the link. For clarity, the external surface of the glove will be designated (A) and the internal surface (B). The glove is washed 20 by rotating horizontal wetted brushes located on both sides of external surface (A). Rotating the projectiosn/pinchers, and applying a vacuum to the inverted cuff, drawing the fingers through the body of the glove, and so completing the inversion.

The glove is again washed 20 by a further set of rotating horizontal wetted brushes located on both sides of the external surface (B). Subsequently, the glove is rinsed 25 by water sprays located on both sides of external surface (B). Again the glove is inverted, by rotating the pincher/projections back to the original position, and applying a vacuum to draw the fingers of the glove, back through the body to complete the inversion. Finally, the glove is rinsed 25 by a further set of water sprays located on both sides of external surface (A).

In a further embodiment, the washing and rinsing steps of sides A and B may be achieved by the same set of apparatus, by reversing the progress of the conveyor 15, or forming a figure S of the conveyor so as to pass the glove through the stations for a second time, following appropriate inversions of the glove.

Next, the glove is subjected to a sterilization process. The invention is not limited to the precise process used, and the skilled person will be aware of a range of techniques that can be adopted for this application. For this embodiment, the glove is dried by hot air flow 30 on both sides of external surface (A) and irradiated by UV light in the C range 254 nanometer located on both sides of external surface (A). Again, the glove is inverted. The glove is again subjected to hot air flow this time on both sides of external surface (B) followed by being irradiated by UV light in the C range 254 nanometer located on both sides of external surface (B).

The glove is then scanned on both sides top-bottom for acquisition of visual cleanliness and code acquisition by the tracking station 35. The data collected can then be stored or sent to a database (not shown) for collation of data on the glove or batch of gloves, and so track the number of process cycles the glove undergoes, as well as charging of the customer.

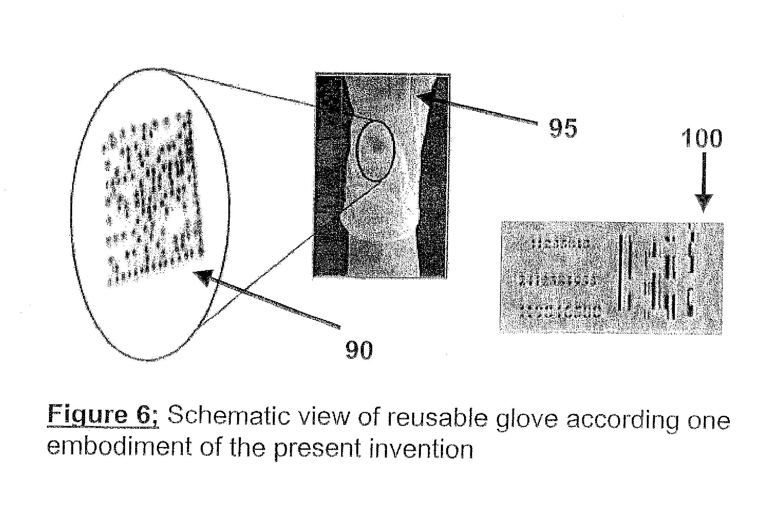

The glove may be reversed on demand 40, such that, when compiling the code, the system recognizes if the code is mirrored or not. If the code is mirrored this means that the glove is not in its original configuration, or out of manufacturing line. As some gloves have special features on fingers enabling a better grip it may be necessary to maintain a particular orientation. As shown in Figure 6, such information may be encoded 90 on the glove 95 and read 100 by the tracking station, not only for the database record, but also for control of the GRU so as to treat this particular glove in the manner expected. For instance, if a particular orientation is required, reading of the corresponding code 90 by the tracking station may be used by the control system of the GRU, and the glove inverted accordingly.

The glove is then transferred out of the conveyor. To perform this operation firstly, a vacuum pipe sucks the glove on the cuff area, and then, the link fingers de-lock, de-stretching the glove from the fingers. The result is that the glove hangs, held only by the vacuum pipe. The glove is then transferred to pinhole control 43. Here the glove undergoes any one of a number of pinhole tests. These tests may be conventional tests as would be known to the skilled person, such as :
i) Water pressure test whereby the glove is filled with water, with the glove inspected for external droplets after a predetermined time, such as 2 minutes;
ii) Conductive tests using saline, whereby again the glove is filled this time with saline solution, with a cathode is placed in the glove. The glove is then placed in a saline bath with an anode. The arrangement is then tested to see if a current is generated;
iii) Mass flow measurement, the method of which is described in more detail later.

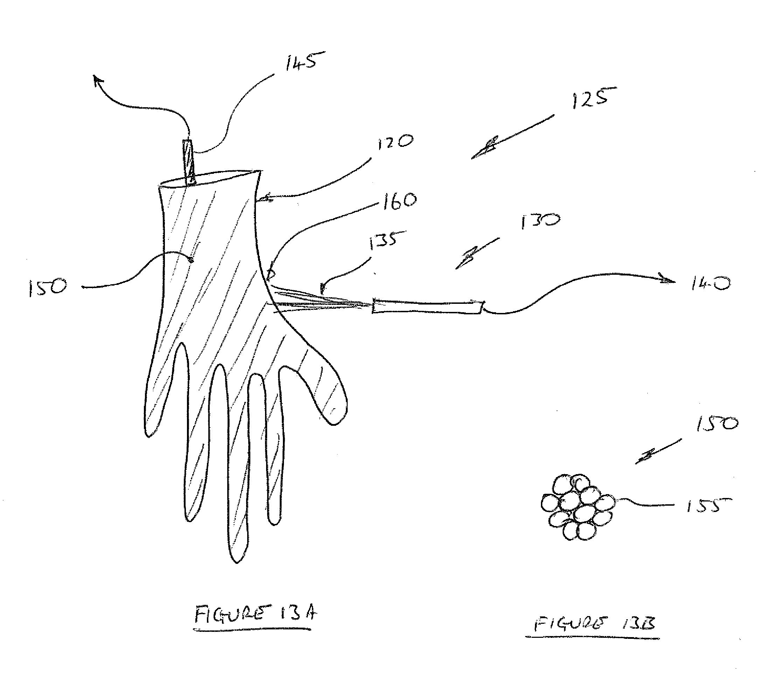

An alternative test is that shown in Figures 13A and 13B. The test involves filling the glove 120 with a non-wetting flowable conductive material 150 that is free to circulate within the small confines of the glove. Such material includes liquid metals, such as mercury or Gallium, but preferably includes small metal spheres 155. The size of the spheres 155 may vary with glove type and size, and the determination of such a size will be clear to the skilled person. By way of example, the spheres may be in the diameter range of 0.5 mm to 2 mm.

The spheres 155 may be any acceptable conductive material, but conveniently may be made from steel, stainless steel, aluminium or any other conductive metal.

An appropriate voltage is applied, which would be clear to the skilled person, in order to have sufficient potential difference to "arc" through any pinholes in the glove. The spatial gap between two balls allow the electrical field to be present in the "unfilled spatial space" and thus to also discharge in case of pinhole located at a "non contact point" between the balls and the glove surface.

The method comprises pouring the materials, such as the balls 155, inside of the hanging glove 120, an anode 145 is introduced in the balls, a voltage is applied to the anode (say in the range 0 to 12KV). A brush 130 made of metallic fibres 135 then brushes 160 both sides of the glove 120 from top to down (or vice versa).

The presence of pinhole is detected through the detection of a current between the anode (balls) and cathode (brush). This contact induces "defect" signal thus a glove reject due to pinhole presence. Subsequently, the balls are vacuumed out of the glove.

This method may have the advantages of :
i) Being extremely rapid, in the setting up of the test, and removal of the balls making the glove ready for the next stage;
ii) Avoiding wetting the glove, which would require a further drying step in the process;
iii) Being adaptable to the conveyor arrangement according to one aspect of the invention;

Following testing, the result is recorded, and sent to the database, as well as being recorded for use by the GRU control system.

After the leak test, the glove deflates and is sucked by a vacuum plate. The glove is then packed 45 in its respective size box or rejected by instructions given by the control system. The boxes, when full and automatically closed, are printed with lot and customer information and conveyed to a container for manual filling of appropriate cartons.

In this embodiment, the invention provides a glove holder (TLD) for automatic glove inverting, in such a way that the entire glove surface, inside and out, is treated in the reprocessing steps. Further, the glove holder itself is also designed to be a conveyor link that carries the glove through its various processing stages.

The glove holder, may also act as a link in the conveyor which enables the different automatic sequences of glove reprocessing from glove returning, washing, drying, testing and packaging.

An encrypted code printed on the glove containing, among other information, a unique serial number for each glove and the size information of the glove. This code may be printed during the manufacturing process but may also be added later.

The tracking system, which receives information from the tracking stations, test stations etc., permits use of an encryption code which enables the system to discriminate "authorized" from "no authorized" gloves. Authorized glove means (a) glove having the physical specifications to be reprocessed and (b) manufactured by an authorized glove manufacturers.

Further the tracking system, through the code, can determine the size and left hand or right hand information and enables automatic packing by size and/or hand orientation after reprocessing. The unique serial number enables a full traceability, recording of results of reprocessing steps and tests results of all individual gloves complying with the legal requirements of the worldwide regulating bodies.

The code and software information treatment enables, apart from the legal compliances, to track the glove from its manufacturer to end of life, and creates a new business model by allowing royalties revenues coming from gloves manufacturers (based on known new glove production) and end-users (based on the knowledge by customers of gloves being reprocessed).

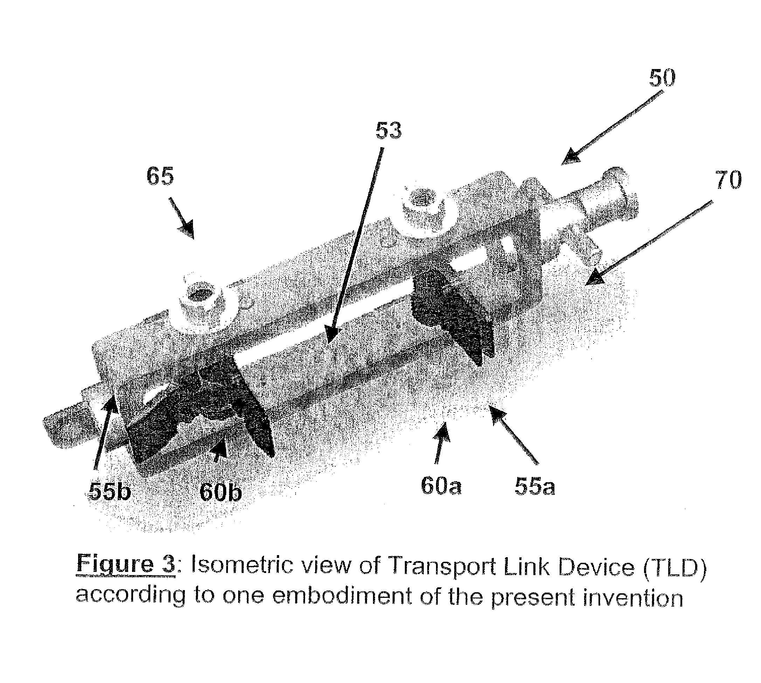

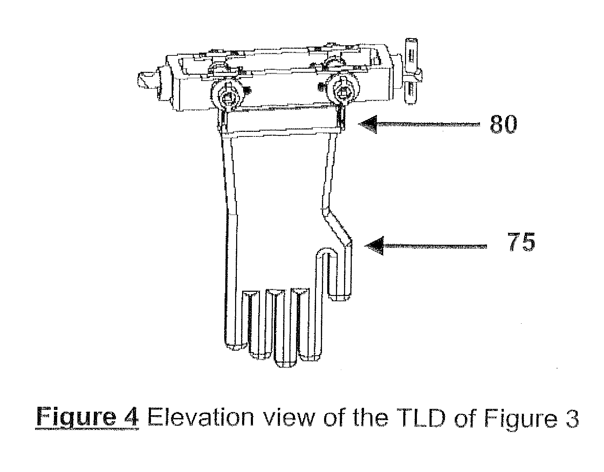

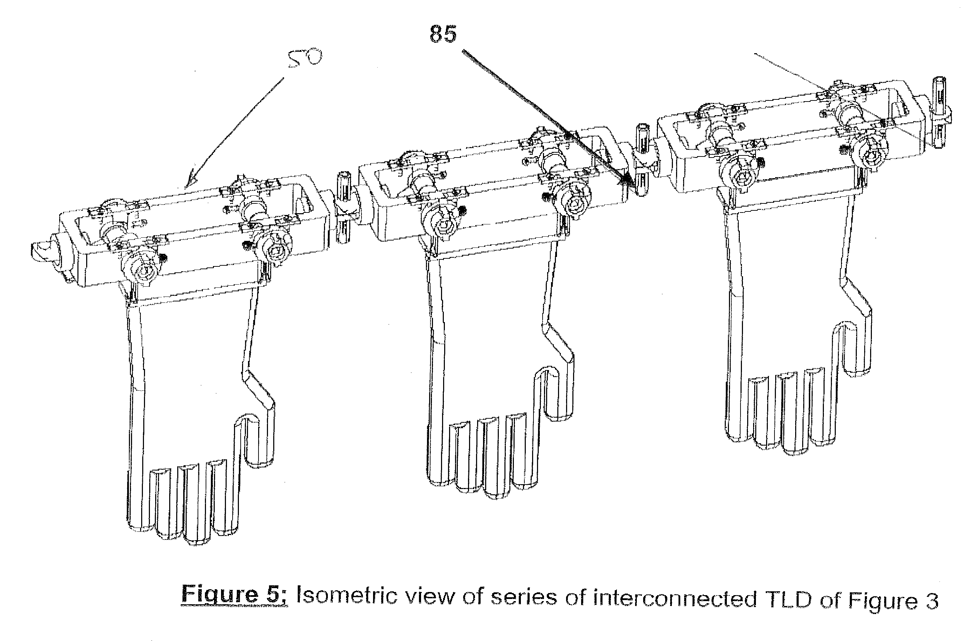

As shown in Figures 3 to 5, the links 50 that are the conveyor components are also the glove holders. The links are hollow having an aperture 53 through which the glove can move during the inversion process, and have two articulated pinchers 55a,b & 60a,b each formed by two articulated fingers. The pinchers are clipped at each extremity of the hollowed part of the link. These pinchers are rotated about spindles 65, by electric motors, up and down inside of the aperture 53 of the link 50. The two fingers of each pincher are able to open or close separately.

The opening/closing movement is generated, before or after pincher rotation, by clipping 80 or de-clipping an elastic polyurethane membrane material 75. The clipping action is performed by the rotation motors. The opening and closing of the fingers enable two different results. The first, when closed and rotating from down to up (or vice-versa), the finger enables the glove cuff to be partly returned inside out or vice versa. The glove is then fully inverted with full fingers extension by vacuum. The second, when open, the fingers allow treatment of the entire surface of the glove. The whole link, after this operation, flips horizontally through 180 degrees bringing back the glove with fingers hanging downwards.

The links 50, in forming the conveyor, make use of connection portions 70, adapted to connect the links 50 in a fashion to permit the completed conveyor to move about the GRU, delivering the attached gloves to each station.

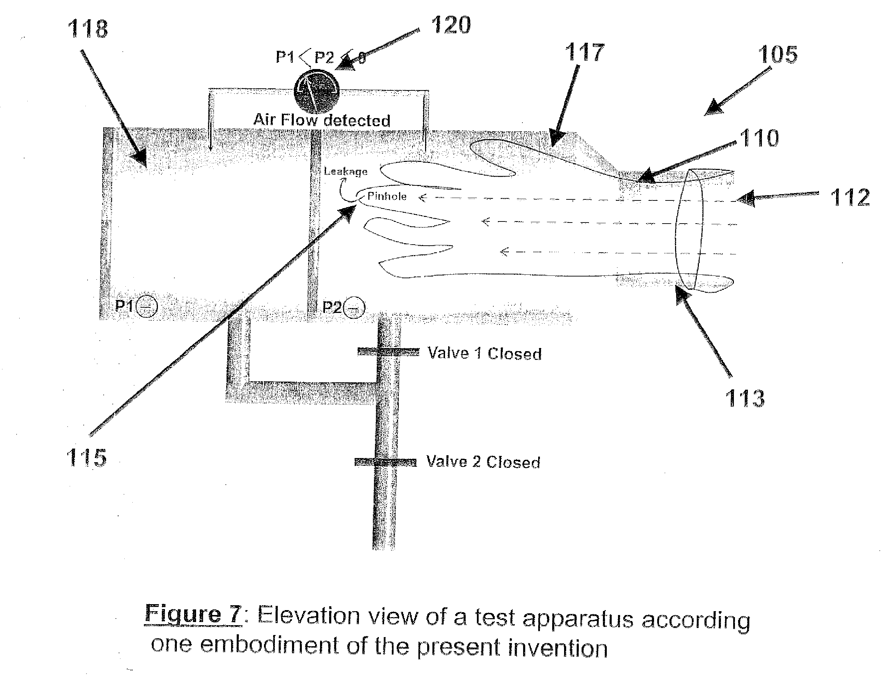

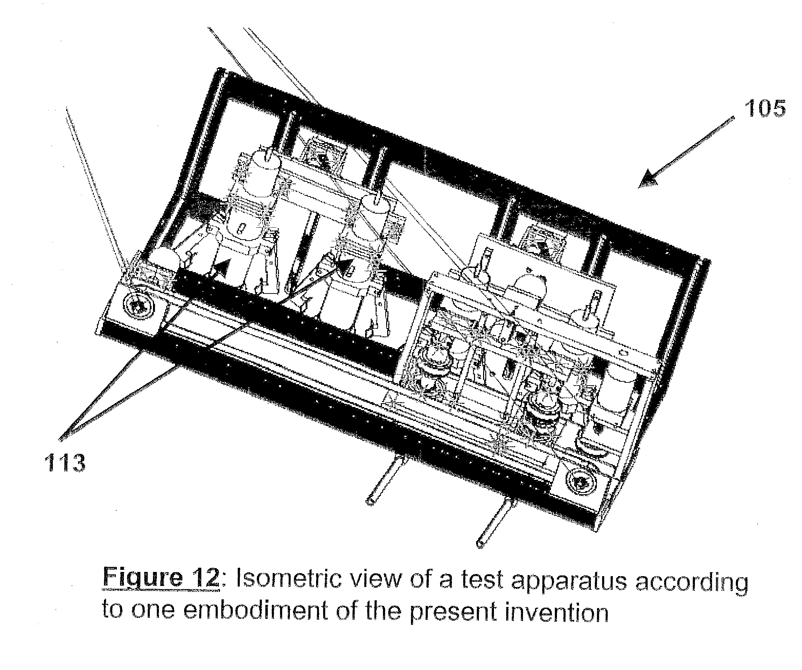

As shown in Figures 7 and 12, in a further embodiment, the invention provides a method of testing leaks 115 in gloves, also called pinholes. This method located along the conveyor, which may automatically perform the test, may use the mass flow measurement 120 between two volume one of the volume being the glove and the other a reference volume.

The pinhole testing (Leak test) is based on mass extraction technology. A small amount of gas leaking 115 from a product expands under vacuum due to low gas density, resulting in a higher volumetric flow rate 120 compared with barometric conditions. Thus, very small flow rates are measured and converted to important mass flows, achieving high sensitivity detection.

During the test, the glove 110 is placed on a clamp 113 and secured by the cuff 112, so as to feed the fingers and body of the glove 110 into to a vacuum chamber 117. This vacuum chamber 117 is itself connected to another chamber 118 through a minimum capillary flow path channel crossing a high sensitivity Mass Air Flow Meter (MAMF). A quick-evacuation valve generates vacuum in the 2 chambers. The glove 110 is sucked inside the cylinder. The vacuum generates a very tight seal between the cuff area 112 and the cylinder clamp 113. The sudden airflow created by the vacuum pressurization will become zero after a period due to the equilibration of the 2 chambers. P1 = P2.

If the glove has no hole, the airflow 120 will remain on zero. If there is a leakage 115, a constant flow, measured in micrograms or 10-6 standard cubic centimeters, in the channel will compensate the pressure unbalance denoting a presence of pinhole.

Again, referring to Figure 6, the figure shows a code printed on the code is a matrix type code. In this embodiment, the code 90 is a matrix type code, which facilitates the storage of high numbers of data on a small area. The data are allocated in a 'fail-safe' mode, enabling the code reconstitution by specific software if "dots" are erased or not "seen" by the scanning hardware. The code structure may allow data recognition even with a distortion of up to 15% in every direction.

Gloves to which this invention may be suitable are made of elastic materials. Code based on numerical and alphabetical printed characters cannot be scanned during the process due to the difficulty or impossibility of code recognition if part of any unique characters are erased or stretched. The code printed during the glove manufacturing or before the reconditioning process may embody a range of data, a non-exhaustive list being :
i) Encryption algorithms;
ii) Serial number of the glove;
iii) Glove handing: Left hand or right hand;
iv) Glove market destination: Health, Food Processing, High-Tech;
v) Glove size;
vi) Customer identification;
vii) Glove Manufacturer code;
viii) Manufacturing line code, and;
ix) Manufacturing Lot number.

During the process, the system receives the code information from the tracking station and decrypts it, then processes the scanned image for glove cleanliness. The system then analyzes the results of the data collected during operation in and the process data received during the processing operations, decides and instruct the control system to pack or reject the gloves. In case of decryption inability, the software instructs the packing system to direct the glove to the reject recipient. In case of successful decryption the software performs the following operations;
1. If the glove is read for the first time the software
   i) Creates a glove "file containing" the code data's
   ii) Computes the machine processing data in the glove file
   iii) Computes the glove testing data performed in step 14 and 17 in its individual file.
   iv) Accept or reject the glove for packaging and further reuse by comparing accepted references and the results of predetermine reference values
2. If the glove has previously been processed the software locates, based on the glove unique serial number, its electronic file and performs the tasks described in the precedent paragraph.
3. Then, the software computes the numbers of (re) processing cycles that the glove has had and based on a pre-determined number of cycles, the software either accepts or rejects the glove for packaging and further-reuse.

The software records all the files and the results in a central database. Every GRU, identified by a unique serial number, its location and owner, upload its data to the central computer merging the different database into a unique database through a mandatory TCP/IP connection ( dial-up, constant or fixed IP). This centralized database enables the recognition of;
1. Number of glove reprocessed by machine owner and by serviced customer. This enables the machine owner to invoice its customer for the service provided, and enables the technology owner to invoice the machine owner fees or royalties based on "per processed or (re)processed glove".
2. Number of gloves rejected and their size enabling accurate and automatic projection for replenishment of the new glove volume needed, split by size. This replenishment knowledge is also available at machine owner level. The machine owner also has the information available from the central computer, via the internet. This local or centralized database enables the regulatory bodies to audit the reprocessing conditions and the glove acceptance and release criteria. This centralized database enables the customer to consult the quality assurance results of the reprocessed glove he is using by "typing" the glove serial number into a password protected website.

## Claims

1. A system for processing reusable gloves comprising
a conveyor means (15) to convey a plurality of the reusable gloves to a plurality of processing stations (3), said processing stations including;
a loading station (5) for mounting the gloves to the conveyor means;
an inspection station for inspecting the gloves for pre-determined criteria;
a washing station (20) for washing the gloves;
an interrogation station (35) for interrogating electronically or optically readable identification means of the gloves so as to receive data from said identification means;
a testing station (43) for testing the integrity of the gloves; and an unloading station for unloading the gloves.;
**characterised by** said processing system being in communication with a tracking system for tracking the progress of said gloves, said tracking system comprising:
a database for storing and accessing the data on each glove;
a plurality of tracking stations, of which the interrogation station is one, each in communication with the database preferably via a wired or wireless connection to any one or a combination of a LAN, WAN and internet;
each tracking station having interrogation means for interrogating the identification means of each glove;
such that the data on each glove is collected at each tracking station, said data and the location of the tracking station being communicated to the database so as to locate and track the progress of each glove from each tracking station.

2. The system according to claim 1, wherein the pre-determined criteria comprise any one or a combination of stains, damage to the glove and type of glove.

3. The system according to claim 1 or claim 2, wherein a pre-determined path and/or sequence of contact with said processing stations define a processing cycle.

4. The system according to any one of the preceding claims, wherein the testing station includes apparatus to conduct either a pin-hole test or a mass flow detector test.

5. The system according to any one of the preceding claims, wherein the unloading station includes means for directing processed gloves to a packaging station.

6. The system according to any one of the preceding claims wherein the inspection station includes means to reject gloves not meeting the pre-determined criteria.

7. The system according to claim 1, wherein the unique identification means includes any one or a combination of RFID, barcode or matrix code systems.

8. The system according to any one of the preceding claims wherein at least one of the plurality of tracking stations includes data storage means for collecting data prior to communicating said data to the database.

9. The system according to any one of the preceding claims, wherein the data includes any one or a combination of customer data, glove identification data, processing history, encryption data and application data.

10. The system according to claim 9, further including a billing system, said billing system having means to match the customer data and glove identification data, and a pricing scale, whereby a cost of processing is based on the processing performed on each glove, said processing priced according to the pricing scale.

11. The system according to any one of the preceding claims, wherein the conveyor includes a device to which the reusable glove is mounted, said device comprising:
a selectively movable body
a first and second engagement means mounted to a frame in spaced relation to each other, such that said engagement means engage an opening of the glove in a stretched condition between the first engagement means to the second engagement means,
said stretched condition sufficient to maintain engagement with the engagement means.

12. The system according to claim 11, wherein the engagement means comprise projections adapted to extend into the opening and contact an inside surface of the glove.
